(19) Europäisches Patentamt
European Patent Office
Office européen des brevets

(11) **EP 2 827 177 B1**

(12) **EUROPEAN PATENT SPECIFICATION**

(45) Date of publication and mention
of the grant of the patent:
**29.11.2017 Bulletin 2017/48**

(51) Int Cl.:
*G02B 1/11* (2015.01)  *G02F 1/1335* (2006.01)
*G02B 1/118* (2015.01)

(21) Application number: **13760782.6**

(22) Date of filing: **12.03.2013**

(86) International application number:
**PCT/JP2013/056806**

(87) International publication number:
**WO 2013/137251 (19.09.2013 Gazette 2013/38)**

(54) **ANTI-REFLECTION FILM**

ANTIREFLEXIONSFOLIE

FILM ANTI-RÉFLEXION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.03.2012 JP 2012059487**
**15.03.2012 JP 2012059453**

(43) Date of publication of application:
**21.01.2015 Bulletin 2015/04**

(73) Proprietor: **Soken Chemical & Engineering Co.,
Ltd.
Toshima-ku,
Tokyo
1718531 (JP)**

(72) Inventors:
• **OSUMI Yoshimasa
Kyoto-shi
Kyoto 600-8530 (JP)**
• **NAKAGAWA Takehiko
Kyoto-shi
Kyoto 600-8530 (JP)**

• **MINOBE Tetsuya
Kyoto-shi
Kyoto 600-8530 (JP)**
• **YAMAMOTO Yuki
Kyoto-shi
Kyoto 600-8530 (JP)**
• **ITO Yoshinori
Kyoto-shi
Kyoto 600-8530 (JP)**
• **TAKAGI Yoshihiko
Kyoto-shi
Kyoto 600-8530 (JP)**

(74) Representative: **Kilian Kilian & Partner
Aidenbachstraße 54
81379 München (DE)**

(56) References cited:
**EP-A1- 2 746 824    WO-A1-2010/074191
JP-A- H09 160 052    JP-A- H11 242 225
JP-A- 2001 075 500    JP-A- 2004 070 164
JP-A- 2004 333 976    JP-A- 2006 331 757
JP-A- 2007 178 873    JP-A- 2010 117 694
JP-A- 2010 117 694    JP-A- 2011 107 195
JP-A- 2012 037 622**

## Description

## Technical Field

The present invention relates to an antireflection film. The present invention relates to an antireflection film that is used in, for example, a display device to prevent reflections of sunlight, room lighting, disturbance light, and the like and to improve the visibility of a screen so as to cause the screen to be clearly seen.

## Background Art

(Operation of antireflection film)

Various devices such as a mobile phone, a mobile computer, and a personal computer include display devices that can display high-definition image. However, in the display device, when outside light such as sunlight or room lighting enters the screen, a part of the light is reflected by the screen to deteriorate contrast on the screen and disadvantageously whiten the screen.

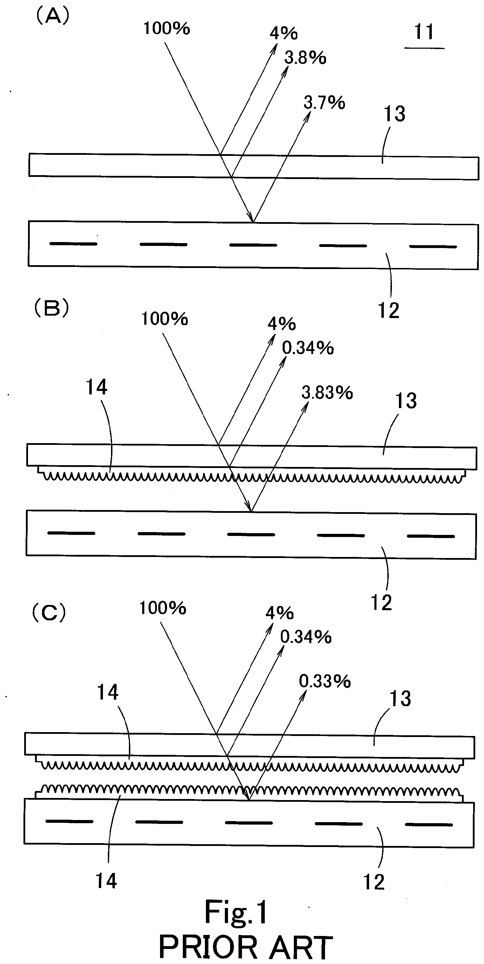

Such a phenomenon in which outside light is reflected occurs as shown in Fig. 1A, for example. Fig. 1A shows a display device 11 in which a cover panel 13 is superposed on the front surface of a liquid crystal display panel 12 through an air gap (space) . When outside light enters the display device 11, light quantity of 4% of the incident outside light is reflected by the front surface of the cover panel 13, light quantity of 3.8% of the incident outside light is reflected by the rear surface of the cover panel 13, and light quantity of 3.7% of the incident outside light is reflected by the front surface of the liquid crystal display panel 12. As a result, when light quantity of 100% of the incident outside light enters the display device 11, total light quantity of 11.5% of the incident outside light is reflected toward the front side. Thus, reflected light (white light) overlaps the image displayed on the liquid crystal display panel 12 to decrease contrast of the image, thereby deteriorating display quality.

In order to prevent the phenomenon from occurring, an antireflection film (ARS) is used. As such an antireflection film, for example, the antireflection films disclosed in Patent Document 1 or Patent Document 3 are known. The antireflection film is obtained such that, on a surface of a transparent film base material, fine optical projections having a refractive index equal to that of the film base material are densely formed. The optical projection has a shape such as a conical shape, a truncated cone shape, or a square pyramid shape.

Fig. 1B shows a case in which an antireflection film 14 is stuck on the rear surface of the cover panel 13. In this case, light quantity of 4% of incident outside light is reflected by the front surface of the cover panel 13, light quantity of 0.34% of the incident outside light is reflected by the rear surface of the cover panel 13, and light quantity of 3.83% of the incident outside light is reflected by the front surface of the liquid crystal display panel 12. As a result, reflection on the rear surface of the cover panel 13 to which the antireflection film 14 is stuck is considerably suppressed, and only total light quantity of 8.17% of the incident outside light is reflected toward the front side. Thus, when one antireflection film 14 is stuck, reflected light quantity is approximately 2/3 times that obtained when no antireflection film 14 is stuck.

Fig. 1C shows a case in which the antireflection films 14 are stuck to the rear surface of the cover panel 13 and the front surface of the liquid crystal display panel 12, respectively. In this case, light quantity of 4% of incident outside light is reflected by the front surface of the cover panel 13, light quantity of 0.34% of the incident outside light is reflected by the rear surface of the cover panel 13, and light quantity of 0.33% of the incident outside light is reflected by the front surface of the liquid crystal display panel 12. As a result, reflections on the rear surface of the cover panel 13 to which the antireflection film 14 is stuck and the front surface of the liquid crystal display panel 12 are suppressed, and only total light quantity of 4.67% of the incident outside light is reflected toward the front side. Thus, when the two antireflection films 14 are stuck, reflection light quantity is approximately 1/3 times that obtained when no antireflection film 14 is stuck.

Thus, when an antireflection film is stuck to the display device in advance, reflection of outside light can be reduced, and contrast on an image is increased to make it possible to vividly display the image. In the above description, a reflectance on a surface to which an antireflection film is not stuck is set to 4%, and a reflectance on a surface to which an antireflection film is stuck is set to 0.35%. However, as these values, typical values are used. The values of the reflectances slightly change depending on the type of an antireflection film, the material of a cover panel, and the like.

(Weak side of antireflection film)

Dirt, sebum, and the like easily adhere to a display device used in a mobile phone, a mobile computer, or the like. For this reason, the surface of the display device is frequently wiped with soft cloth, a cleaner, or the like to wipe out dirt, sebum, or the like. When the dirt, sebum, or the like on the surface is wiped out, a cover panel is pressed with a finger. For this reason, as shown in Fig. 1B or 1C, when an antireflection film is stuck, fine optical projections on the antireflection film are depressed with a surface facing the fine optical projections and easily flattened out. Furthermore, in a display device including a touch panel formed on the front surface, since the touch panel is depressed with a finger or a touch pen, when an antireflection film is stuck, optical projections on the antireflection film are depressed against a surface facing the optical projections and easily flattened out. When the optical projections are flattened out in this manner, the antireflection function of the antireflection film is deteriorated and damaged.

(Protective pillar of antireflection film)

For this reason, in an antireflection film disclosed in Patent Document 2, on an antireflection film having a surface on which nano-order optical projections are densely formed, micron-order protective pillars having a height larger than that of the optical projections are scattered. The optical projections are protected by the protective pillars to prevent the optical projections from being easily flattened out even though the surface of the display device is pressed.

Patent Document 2 describes conical protective pillars having conical shapes, square pyramid shapes, triangular pyramid shapes, and the like and columnar protective pillars having quadratic prism shapes, circular columnar shapes, and elliptic cylinder shapes. However, when the conical protective pillars are used, the tops of the pillars are easily flattened when the protective pillars are depressed with a surface facing the protective pillars. For this reason, top surfaces of the protective pillars need to be made flat to be able to withstand a load. In addition, in order to withstand the load, the top surfaces of the protective pillars preferably have large areas as much as possible. However, since the protective pillars cannot have antireflection structures formed thereon, when the areas of the top surfaces of the protective pillars are increased, the optical performance of the antireflection film is deteriorated. When the side surfaces of the protective pillars are inclined, the areas of the proximal end surfaces of the protective pillars increase . Accordingly, the areas of regions having no antireflection structure on the antireflection film increase. On the other hand, when columnar protective pillars each having a uniform section are used, mold releasing properties of an antireflection film are poor when the antireflection film is molded, and the protective pillars are not easily released from a mold. As a result, the protective pillars are not easily increased in height. For this reason, among persons skilled in the art, it is considered that the side surfaces of the protective pillars is brought close to perpendicular surfaces as much as possible without influencing molding properties to reduce useless areas of the protective pillars. In general, protective pillars having inclined side surfaces and truncated cone shapes that are close to circular columnar shapes are used.

(Difference in reflectance between front-surface reflection and rear-surface reflection)

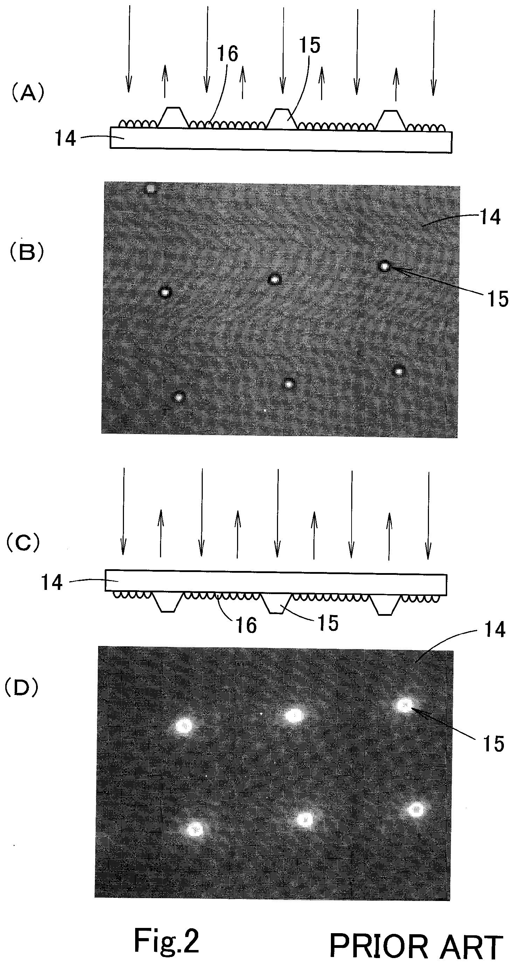

However, when protective pillars on an antireflection film have truncated cone shapes (angle between a side surface and a central axis is about 20°), an antireflection effect obtained in a case in which outside light enters an opposing surface (rear surface) of the surface on which the optical projections 16 or the protective pillars 15 are formed (to be referred to rear-surface incidence hereinafter) as shown in Fig. 2C is inferior to an antireflection effect obtained in a case in which outside light enters a surface (front surface) on which optical projections 16 or protective pillars 15 are formed as shown in Fig. 2A (to be referred to as front-surface incidence hereinafter). Fig. 2B is a micrograph of the front surface of an antireflection film when outside light enters the front surface, and Fig. 2D is a micrograph of the rear surface of the antireflection film when outside light enters the rear surface. As is apparent from the micrographs, in the rear-surface incidence, portions corresponding to the protective pillars shine considerably brightly more than those in the front-surface incidence. In particular, since the side surface of the protective pillar strongly shines, the pillar shines in an annular shape. When this is expressed by numerical values, the reflectance of the antireflection film in the rear-surface incidence is 0.49% larger than that in the front-surface incidence.

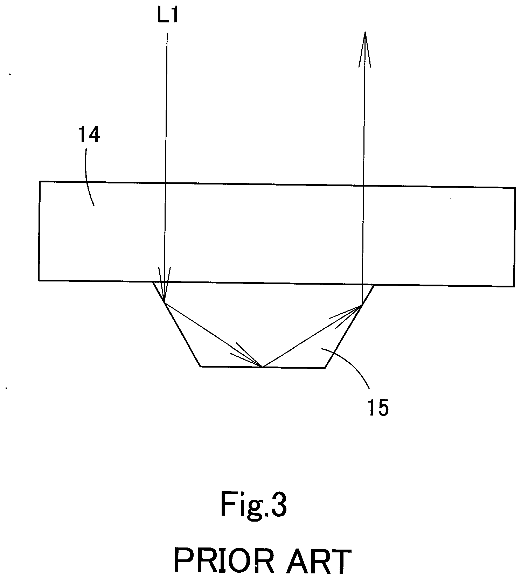

The reason why the above phenomenon occurs is as follows. As shown in Fig. 3, when light L1 enters the protective pillar 15 having a truncated cone shape in rear-surface incidence, the incident light L1 is reflected more than once by the side surface and the distal-end surface of the protective pillar 15 to cause regressive reflection. As a result, in the rear-surface incidence, the reflectance of the antireflection film 14 increases.

In a conventional antireflection film including protective pillars formed thereon as described above, optical characteristics in rear-surface incidence are considerably different from those in front-surface incidence. For this reason, a reflectance obtained when the antireflection film is stuck to a front surface of a liquid crystal display panel (front-surface incidence) is considerably different from a reflectance obtained when the antireflection film is stuck to a rear surface of a cover panel (rear-surface incidence) . The antireflection film is disadvantageous in design or application for a display device, and difficult to be used.

(Occurrence of interference by depression)

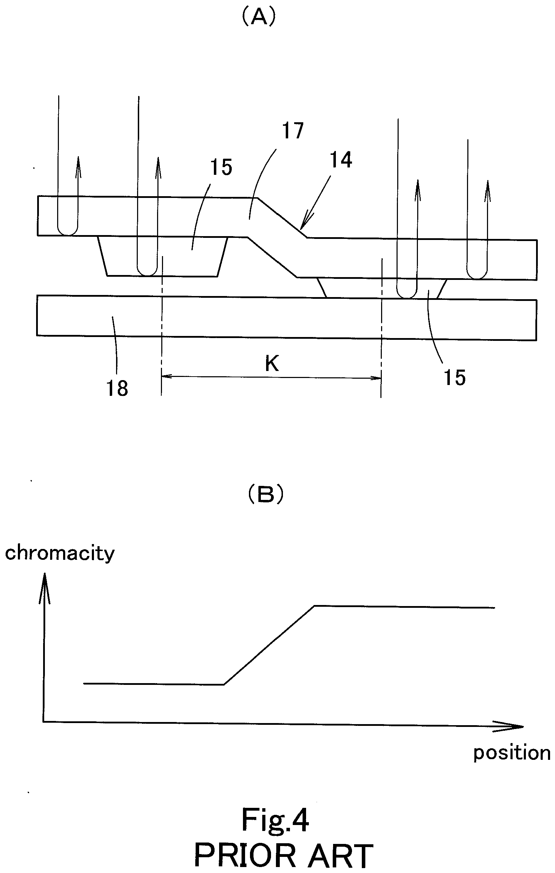

Fig. 4A shows the antireflection film 14 arranged to face a facing member 18 such as a liquid crystal display panel. In the antireflection film 14, an antireflection structure including fine optical projections 16 and the protective pillars 15 that are higher than the optical projections 16 to protect the optical projections are formed on a surface of a film base material 17. In Fig. 4A, the optical projections 16 are not shown. An interval K between the protective pillars 15 is about 50μm.

The protective pillar 15 on the observer's left in Fig. 4A is a protective pillar separated from the facing member 18. On the other hand, the protective pillar 15 on the observer's right in Fig. 4A is a protective pillar that is flattened out between the antireflection film 14 and the facing member 18 by pressing the antireflection film 14. When the protective pillars 15 are formed on the antireflection film 14, light (reflectance of 4%) reflected by the distal-end surface of the protective pillar 15 interferes with light (reflectance of 0.35%) reflected by the lower surface of the film base material 17. However, even though the interference occurs, a visual influence of the interference depends on optical intensities of the two beams interfering with each other and a difference between lengths (optical path difference) of the beams. In the case in Fig. 4A, since interference between beams having intensities considerably different from each other, i.e. , between weak reflected light having an optical intensity of 0.35% on the lower surface of the film base material 17 and reflected light having an optical intensity of 4% on the distal-end surface of the protective pillar 15 occurs, the length difference need to be considerably short to cause the intensity of interference light to reach a level at which the interference light can be visually checked. As a result of experiments and examinations, it was found that, to cause interference between the 0.35% reflected light and the 4% reflected light to reach a level at which the interference can be visually checked, the length difference between the beams needed to be short to about 2μm.

In the left protective pillar 15 in Fig. 4A, the height of the protective pillar 15 is normally larger than 2μm. For this reason, even though light reflected by the lower surface of the film base material 17 and light reflected by the distal-end surface of the protective pillar 15 interfere with each other, the interference does not reach a level at which the interference can be visually checked. In contrast to this, when the antireflection film 14 is pressed with, for example, a finger or the like to flatten the protective pillar 15 like the right protective pillar 15 in Fig. 4A to obtain a height of not more than 2 μm, interference between the light reflected by the lower surface of the film base material 17 and the light reflected by the distal-end surface of the protective pillar 15 reaches a level at which the interference can be visually checked. When the interference reaches the level at which the interference can be visually checked, a color (interference color) generated by the interference is observed. For this reason, as shown in Fig. 4B, a region that is not pressed on the antireflection film 14 is not colored, and only a pressed region looks colored with the interference color.

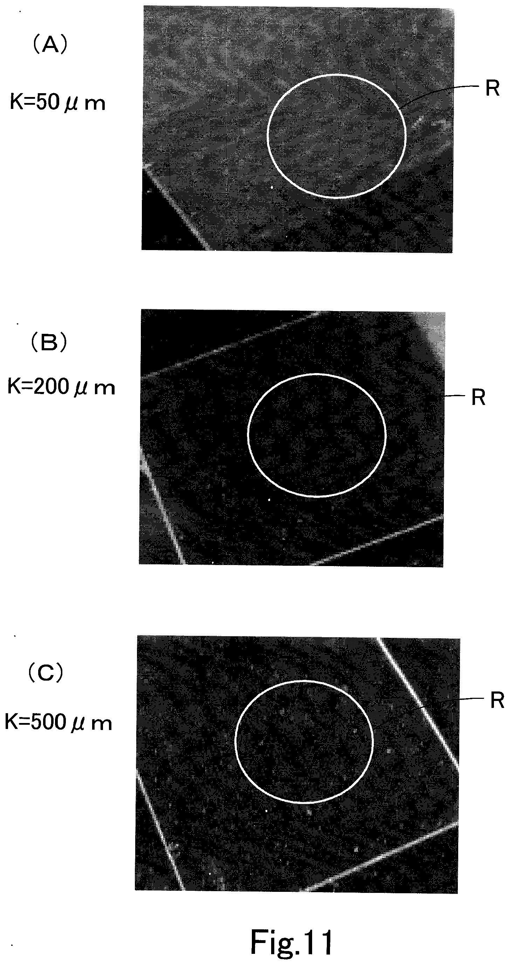

Fig. 11A is a photograph showing an antireflection film when a region indicated by a circle R is pressed (The circle R has a diameter almost equal to the width of adult's finger.) . An interference color generated in the pressed region is a faint color. However, even though the interference color itself is a faint color, since a change in color caused between the region and a peripheral region in which no interference color is generated is unsightly, a visual problem is posed.

Further prior art documents are JP 2012 037622 A and JP 2004 333976

A.

**Prior Art Document**

**Patent Document**

    [Patent Document 1] Japanese Unexamined Patent PublicationNo. 2002-122702
    [Patent Document 2] Japanese Unexamined Patent Publication No. 2004-70164
    [Patent Document 3] Japanese Patent No. 4539759

**SUMMARY OF THE INVENTION**

**Problem to be Solved by the Invention**

The present invention has been made in consideration of the technical problem described above and has as its object to prevent, on an antireflection film including protrusions (protective pillars) for protecting optical projections, regressive reflection caused by the protective pillars in rear-surface incidence. This object is achieved by the subject-matter of the independent claim. Further advantageous embodiments of the invention are the subject-matter of the dependent claims. It is another aim of the present invention to obscure, on an antireflection film having protrusions (protective pillars) for protecting optical projections, a change in color between an interference color generated in a pressed region and a color in a peripheral region in which no interference color is generated. Aspects of the invention are set out below.

**Means for Solving the Problem**

An antireflection film according to the present invention is disclosed in claim 1. Each of the protrusions has a section being parallel with a surface of the film base material and having a sectional area that gradually decreases from a proximal-end side to a distal-end side, and, when a diameter of the protrusion at a proximal end thereof, a height of the protrusion, and an angle between a side surface of the protrusion and a central axis of the protrusion on a section passing through the central axis of the protrusion are given by D, H, and $\theta$, respectively, the antireflection film has the following relationship:

$$D > 2H \times \tan(2\theta) \qquad \ldots \text{(condition 1)}.$$

Since the antireflection film according to the present invention satisfies the condition 1, light entering the protrusion in rear-surface incidence is not regressively reflected in an original direction, and is guided into the film base material. For this reason, even though the antireflection film is used in a rear-surface incidence mode, the protrusion does not easily shine, and advantages of the antireflection film become more preferable. As a result, a difference between a reflectance obtained when the antireflection film is used such that light enters the antireflection film in rear-surface incidence and a reflectance obtained when the antireflection film is used such that light enters the antireflection film in front-surface incidence becomes small. It is not always required that all the protrusions satisfy condition 1. Even though at least some of the protrusions satisfy condition 1, reflected light in rear-surface incidence is advantageously reduced.

In the antireflection film according to the present invention, when refractive indexes of the protrusions are given by n, at least one protrusion of the plurality of protrusions satisfies the following relationship:

$$\theta > 0.5 \times \arcsin(1/n) \qquad \ldots \text{(condition 2)}.$$

In the conventional technique, condition 2 is satisfied, and regressive reflection in rear-surface incidence occurs. Thus, when condition 1 is applied when condition 2 is satisfied, reflected light in rear-surface incidence can be reduced.

In another aspect of the antireflection film according to the present invention, the protrusions have dimensions of smaller than 60 $\mu$m when viewed from the top and are arranged at intervals of 100 $\mu$m or more.

In still another aspect of the antireflection film according to the present invention, a dimension when viewed from the top of the protrusion is preferably 40 $\mu$m or less especially. For example, the dimension when viewed from the top is preferably about 20 $\mu$m.

In still another aspect of the antireflection film according to the present invention, intervals between the protrusions are preferably 200 $\mu$m or more.

In still another aspect of the antireflection film according to the present invention, a density at which the protrusions are arranged is preferably about 1%.

In still another aspect of the antireflection film according to the present invention, the height of the protrusion is preferably 2 $\mu$m or more. When the height of the protrusion is smaller than 2 $\mu$m, even though the antireflection film is not pressed, interference fringes disadvantageously occur between the antireflection film and a surface of a member such as a liquid crystal panel facing the antireflection film.

Furthermore, a density of the protrusions per unit area is preferably 1% or more. The protrusions for protecting an antireflection structure must support the antireflection film while withstanding a predetermined load. For this purpose, the protrusions need occupy an area that is at least 1% of the area of the antireflection film. When the density of the protrusions decreases, a region between the protrusions may be bent to bring the protrusions into contact with the facing member. For this reason, the intervals between the protrusions are not excessively widened. For this purpose, the protecting pillars are required to have a density of 1% or more.

In still another aspect of the antireflection film according to the present invention, when the antireflection film is used while being superposed on a liquid crystal panel, an alignment direction of the protrusions may be inclined with respect to an alignment direction of the liquid crystal panel. According to the aspect, even though an alignment pitch of the protrusions on the antireflection film is almost equal to a pixel pitch of the liquid crystal panel, Moire fringes do not easily occur.

In still another aspect of the antireflection film according to the present invention, the antireflection film can be arranged between, for example, an information display module and a cover panel or a touch panel module. In this manner, the screen of a display device can be prevented from being hard to be seen due to reflection of sunlight or illumination lighting.

A means for solving the problem in the present invention has characteristics obtained by arbitrarily combining the constituent elements described above. The present invention enables a large number of variations obtained by combining the constituent elements.

## BRIEF DESCRIPTION OF THE DRAWINGS

[Fig. 1] Fig. 1A is a schematic sectional views of a display device in which an antireflection film is not arranged. Fig. 1B is a schematic sectional view of a display device using one antireflection film. Fig. 1C is a schematic sectional view of a display device using two antireflection films.

[Fig. 2] Fig. 2A is a diagram showing light entering an antireflection film in front-surface incidence. Fig. 2B is a micrograph showing a manner of a front surface of antireflection film which light enters in front-surface incidence. Fig. 2C is a diagram showing light entering the antireflection film in rear-surface incidence. Fig. 2D is a micrograph showing a manner of a rear surface of the antireflection film which light enters in rear-surface incidence.

[Fig. 3] Fig. 3 is a pattern diagram showing a manner in which regressive reflection is caused by protective pillars in rear-surface incidence on a conventional antireflection film.

[Fig. 4] Fig. 4A is a schematic view showing a state in which, in a conventional antireflection film, when a part of the antireflection film is pressed to flatten a protective pillar between the antireflection film and a facing member. Fig. 4B is a graph showing a change in chromaticity corresponding to Fig. 4A.

[Fig. 5] Fig. 5 is a partially enlarged perspective view showing an antireflection film according to the first embodiment of the present invention.

[Fig. 6] Fig. 6 is a schematic view showing a section passing through the central axis of one protective pillar.

[Fig. 7] Fig. 7 is a diagram showing a relationship between the diameter of a protective pillar and the intensity of regressive reflection caused by the protective pillar.

[Fig. 8] Fig. 8 is a diagram for explaining a protective pillar having a curved sectional shape.

[Fig. 9] Fig. 9 is a partially enlarged perspective view showing an antireflection film according to a second embodiment of the present invention.

[Fig. 10] Fig. 10A is a schematic view showing a state in which, in the antireflection film according to the first embodiment of the present invention, a part of the antireflection film is pressed to depress a protective pillar between the antireflection film and a facing member. Fig. 10B is a graph showing a change in chromaticity corresponding to Fig. 10A.

[Fig. 11] Figs. 11A, 11B, and 11C show manners obtained when parts of antireflection films in which intervals between protective pillars are changed to 50 $\mu$m, 200 $\mu$m, and 500 $\mu$m, respectively are pressed.

[Fig. 12] Figs. 12A, 12B, and 12C show manners obtained when parts of antireflection films in which diameters of protective pillars are changed to 20 $\mu$m, 40 $\mu$m, and 60 $\mu$m, respectively are pressed.

[Fig. 13] Figs. 13A, 13B, and 13C are schematic views for explaining a handling method of an antireflection film.

[Fig. 14] Fig. 14 is a diagram for explaining each arrangement of an antireflection film and an image display panel.

[Fig. 15] Fig. 15A is a diagram showing a manner in which an antireflection film facing a liquid crystal panel is bent. Fig. 15B is a diagram showing an antireflection film having protective pillars each having a height of 2 $\mu$m or more.

[Fig. 16] Fig. 16A is a photograph showing interference fringes (Newton's ring) generated in an antireflection film having no protective pillars. Fig. 16B is a photograph showing an antireflection film having protective pillars each having a height of 3 $\mu$m.

## Reference Numerals

| | |
|---|---|
| 21, 31, 40 | Antireflection film |
| 22 | Film base material |
| 23 | Optical projection |
| 24 | Protective pillar |
| 24a | Side surface of protective pillar |
| 24b | Distal-end surface of protective pillar |
| 42 | Image display panel |
| 43 | Cover panel |
| K | Interval between protective pillars |

## BEST MODE FOR CARRYING OUT THE INVENTION

Preferred embodiments of the present intention will be described below with reference to the accompanying drawings. The present invention is not limited to the following embodiments, and various changes in design can be effected without departing from the scope of the present invention as defined by the claims.

(First Embodiment)

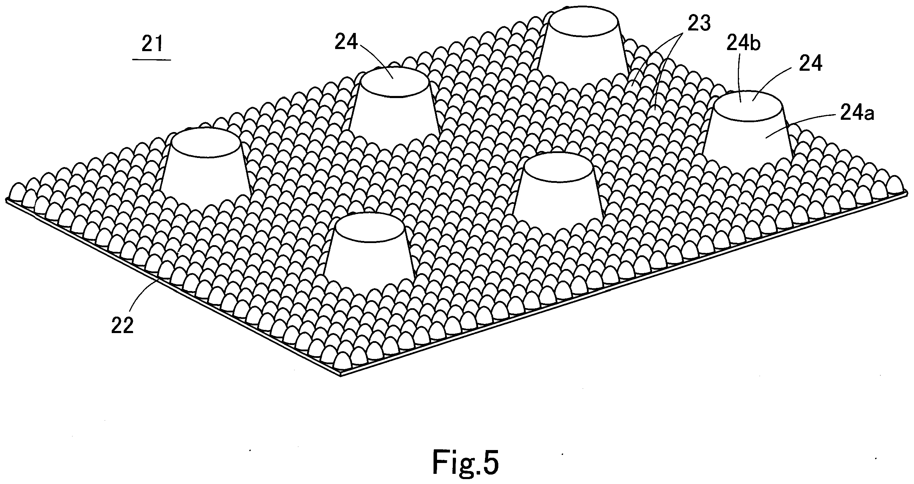

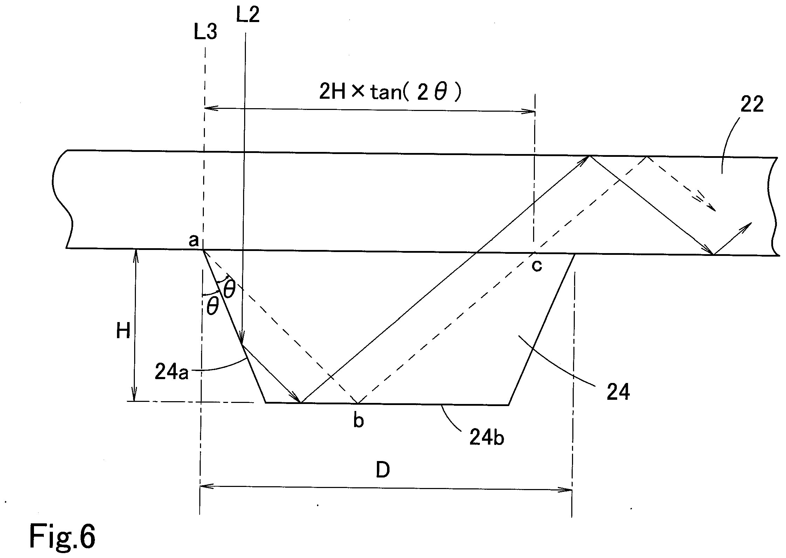

Fig. 5 is a partially enlarged perspective view showing an antireflection film 21 according to a first embodiment of the present invention. Fig. 6 is a sectional view showing a section passing through the central axis of its protrusion, i.e., a protective pillar 24. As shown in Fig. 5, the antireflection film 21 is formed such that, on a smooth surface of a transparent film base material 22, a large number of transparent optical projections 23 having a refractive index equal to that of the film base material 22 are densely formed. On the surface of the film base material 22, transparent protective pillars 24 (protrusions for preventing tight contact) each having a truncated cone shape and a refractive index equal or almost equal to that of the film base material 22 are arranged at a predetermined pitch.

The film base material 22 is made of a transparent resin having a large refractive index such as a polycarbonate resin or an acrylate resin and shaped in the form of a plate. The film base material 22 may be a hard resin base material or a thin flexible film base material the thickness of which is not limited to a specific value.

Optical projections 23 are nano-sized fine projections, and have shapes such as conical shapes, truncated cone shapes, or quadrangular pyramid shape. The shape of the optical projection 23 may configure a part of an ellipsoid of revolution.

The protective pillar 24 has a truncated cone shape in which the area of a distal-end surface is smaller than the area of a bottom surface, and has a height larger than that of the optical projection 23. The protective pillar 24 has a side surface 24a and a distal-end surface 24b. The distal-end surface 24b is parallel with the surface of the film base material 22. As indicated by a solid arrow in Fig. 6, when light L2 vertically enters the antireflection film 21 in rear-surface incidence, the light L2 hitting on the side surface 24a is totally reflected by the side surface 24a, enters the distal-end surface 24b, and is totally reflected by the distal-end surface 24b. Thereafter, the light L2 enters the film base material 22 without entering the side surface 24a again and is laterally guided into the film base material 22. Thus, even though the light enters the antireflection film 21 in rear-surface incidence, the light is regressively reflected by the protective pillar 24 and does not return in an original direction. For this reason, the protective pillar 24 is hard to be seen due to reflected light. As a result, in each of the front-surface incidence and the rear-surface incidence, reflected light can be advantageously cut at the same level.

A condition for causing light entering the antireflection film in rear-surface incidence to exhibit a behavior as shown in Fig. 6 will be clarified. Since light that is most easily regressively reflected is light entering an end (point a in Fig. 6) of the protective pillar 24, when the light cannot be regressively reflected, any light reflected by the side surface 24a is not regressively reflected. When the refractive index of the protective pillar 24 and an angle between the side surface 24a on a section passing through the central axis of the protective pillar 24 and the central axis are given by n and $\theta$, respectively, a condition under which light L3 entering the point a on the end of the protective pillar 24 is totally reflected by the side surface 24a is given by:

$$0° < \theta < \arccos(1/n) \qquad \ldots \text{(condition 3)}.$$

The light L3 totally reflected by the point a enters the distal-end surface 24b, a condition under which the light L3 is totally reflected by the distal-end surface 24b is given by:

$$\theta > 0.5 \times \arcsin(1/n) \qquad \ldots \text{(condition 4)}.$$

A condition under which a point b is not on the side surface 24a but on the distal-end surface 24b is given by the following expression, where the diameter of the proximal-end surface of the protective pillar 24 is D, and the height of the protective pillar 24 is H,

$$H \times \tan(2\theta) < D - H \times \tan(\theta) \qquad \ldots \text{(condition 5)}.$$

Furthermore, in order to prevent the light L3 in rear-surface incidence from being regressively reflected, light totally-reflected by the distal-end surface 24b need only pass on the left side of a point c on the end of the side surface 24a. For this purpose,

$$D > 2H \times \tan(2\theta) \qquad \qquad \ldots \text{(condition 6)}$$

need only be satisfied.

In order to prevent regressive reflection from occurring in rear-surface incidence as described above, the conditions 3 to 6 need only be satisfied. In this case, when the angle $\theta$ between the side surface 24a and the central axis comes close to 45°, the diameter D of the protective pillar 24 must be very large (see condition 6), the $\theta$ must be practically smaller than 45°. For this reason, when the refractive index is a normal value, condition 3 is naturally satisfied. Furthermore, when condition 6 is satisfied, condition 5 is also satisfied. Thus, it is understood that condition 4 and condition 6 need only be satisfied. However, when all the protective pillars 24 do not satisfy condition 4, since light passes through the distal-end surface 24b and is not regressively reflected, a problem is not essentially posed. Therefore, when at least some of the protective pillars 24 satisfy condition 4, the invention of this application is useful. Consequently, it is understood that the protective pillars 24 can be prevented from shining by regressive reflection as long as condition 6 is satisfied.

All the protective pillars 24 preferably satisfy condition 6. However, all the protective pillars 24 are not required to satisfy condition 6. When at least some of the protective pillars 24 satisfy condition 6, the effect can be obtained at a limited level.

When the antireflection film 21 is shaped, in consideration of properties of removal of the protective pillars 24 from a mold, difficulty of occurrence of chipping, and the like, the angle $\theta$ of the side surface 24a is desirably set to 30° or more and 40° or less, and, in particular, 30° or more and 35° or less. Thus, as an example of the protective pillar 24 that satisfies condition 6, for example, the protective pillar 24 having a height H of about 3 $\mu$m and a diameter D of 3 $\mu$m may be used.

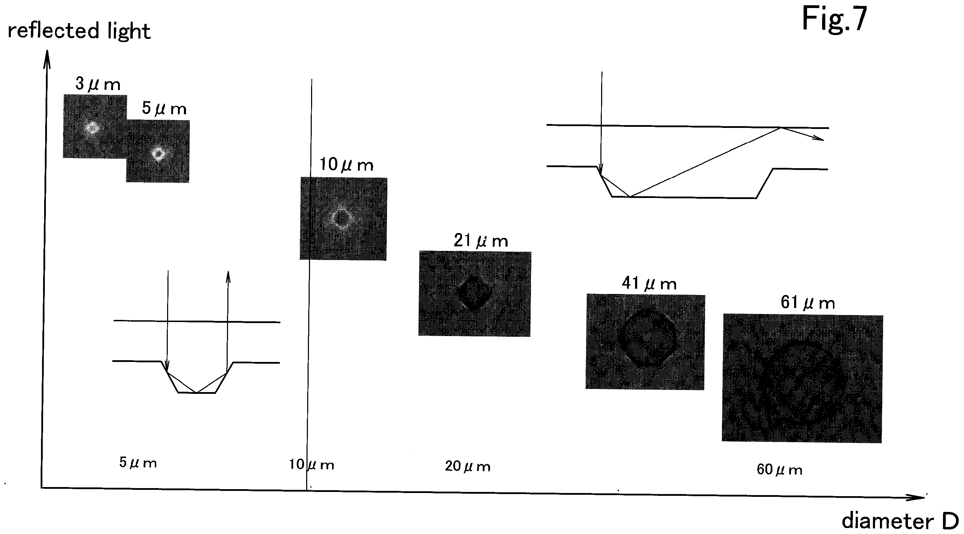

Fig. 7 shows micrographs obtained when light enters protective pillars having different diameters D in rear-surface incidence. The protective pillars are aligned in ascending order of the diameters D along the abscissa, and the protective pillars are aligned in ascending order of the intensities of reflected light along the ordinate. As conditions for this measurement, the height H of the protective pillar is set to 3 $\mu$m, and the angle $\theta$ of the side surface 24a is set to 30°. In this numerical example, the minimum value of the diameter D calculated on the basis of condition 6 is about 10 $\mu$m. The first and second pillars having the diameters D of 3 $\mu$m and 5 $\mu$m from the left are the protective pillars of the conventional technique, and the pillar having a diameter D of 10 $\mu$m is on the boundary. The first, second, and third protective pillars having the diameters D of 21 $\mu$m, 41 $\mu$m, and 61 $\mu$m from the right are the protective pillars according to the embodiment of the present invention. The protective pillars having the diameters D of 3 $\mu$m and 5 $\mu$m considerably shine due to regressive reflection. The protective pillar having the diameter D of 10 $\mu$m leaves regressively reflected light in relation to profile irregularity. In the protective pillar having the diameter D of 21 $\mu$m or more, regressively reflected light is rarely observed.

(Extension to protective pillar having curved section)

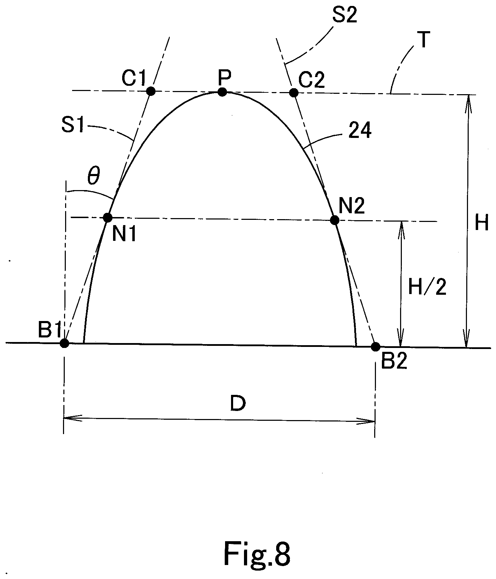

An application of condition 6 when the section of the protective pillar 24 is curved will be described below. Fig. 8 shows, as an example of the protective pillar, the protective pillar 24 having an elliptical section. When a height of a top P measured from the bottom surface of the protective pillar 24 is given by H, points N1 and N2 on the surface of the protective pillar 24 at a height that is 1/2 the height H will be considered. More specifically, a height of a horizontal plane T passing through the top P and being parallel with the bottom surface is given by H when the height is measured from the bottom surface, and points on the surface of the protective pillar 24 at the height of H/2 from the bottom surface are given by N1 and N2, respectively. Next, tangent lines S1 and S2 tangent to the protective pillar surface at the points N1 and N2 on the section passing through the central axis of the protective pillar 24 are calculated, intersection points between the tangent lines S1 and S2 and the bottom surface are given by B1 and B2, respectively, and the intersection points between the tangent lines S1 and S2 and the horizontal plane T are given by C1 and C2, respectively. A truncated cone shape defined by a trapezoid B1 - N1 - C1 - P - C2 - N2 - B2 configured by the tangent lines S1 and S2 and the horizontal plane T that are defined by the sections as described above is a shape to which condition 6 is applied. That is, when condition 6 is applied to the protective pillar 24 having the shape, a distance between B1 and B2 may be defined as the diameter D, and angles between the tangent lines S1 and S2 and the central axis may be defined as the angle $\theta$.

(Second Embodiment)

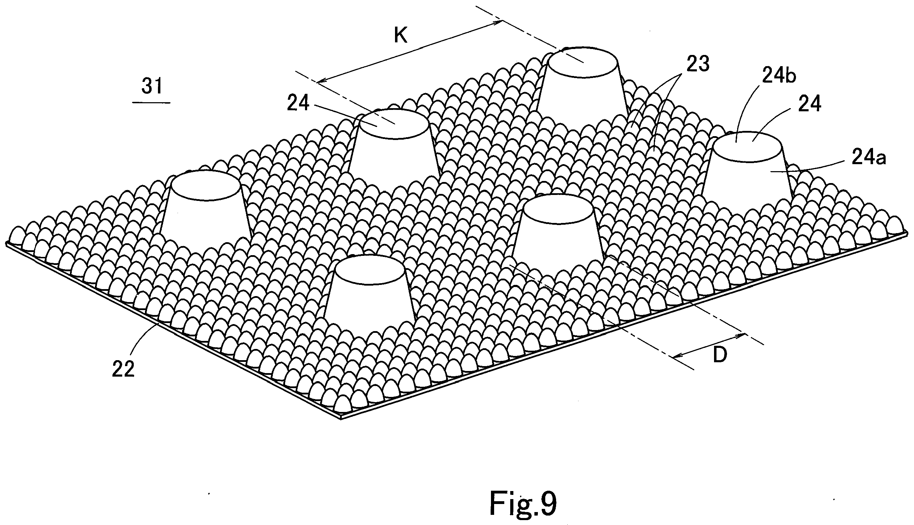

An antireflection film 31 according to a second embodiment of the present invention will be described below. Fig. 9 is a partially enlarged perspective view of the antireflection film 31 according to the second embodiment of the present invention. The antireflection film 31 is formed such that, on a smooth surface of a transparent film base material 22, a large number of transparent optical projections 23 having a refractive index equal to that of the film base material 22 are densely formed. On the surface of the film base material 22, transparent protective pillars 24 (protrusions for preventing tight contact) each having a truncated cone shape and a refractive index equal or almost equal to that of the film base material 22 are arranged at a predetermined pitch.

The film base material 22 is made of a transparent resin having a large refractive index such as a polycarbonate resin or an acrylate resin and shaped in the form of a plate. The film base material 22 may be a hard resin base material or a thin flexible film base material the thickness of which is not limited to a specific value.

Optical projections 23 are nano-sized fine projections, and have shapes such as conical shapes, truncated cone shapes, or quadrangular pyramid shape. The shape of the optical projection 23 may configure a part of an ellipsoid of revolution.

The protective pillar 24 has a truncated cone shape in which the area of a distal-end surface is smaller than the area of a bottom surface, and has a height larger than that of the optical projection 23. The protective pillar 24 has a side surface 24a and a distal-end surface 24b. The distal-end surface 24b is parallel with the surface of the film base material 22. The protective pillar 24 has a proximal end surface having the diameter D of smaller than 60 $\mu$m. In particular, the diameter D of the protective pillar 24 is desired to be 40 $\mu$m or less in the embodiment. The protective pillars 24 are arranged on the film base material 22 at intervals K of 100 $\mu$m or more, preferably, 200 $\mu$m or more.

In the antireflection film 31 according to the second embodiment of the present invention, the intervals between the protective pillars 24 are larger than those in the conventional technique. Fig. 11A is a photograph showing an antireflection film 14 of the conventional technique. In the antireflection film 14, the protective pillars 15 are arranged at intervals of K = 50 $\mu$m. Figs. 11B and 11C are photographs showing the antireflection film 31 according to the second embodiment of the present invention. In the antireflection films, the protective pillars 24 are arranged at intervals of K = 200 $\mu$m and 500 $\mu$m, respectively. Both the protective pillars 15 and 24 have the diameters D of 100 $\mu$m or less, respectively. In each of Figs. 11A, 11B, and 11C, a region having a width almost equal to that of adult's finger is pressed. The pressed region is surrounded by a circle R. In the case in Fig. 11A (K = 50 $\mu$m), the pressed region is lightly colored to make it possible to discriminate the region from a peripheral region thereof . However, in the case in Fig. 11B (K = 200 $\mu$m) , the color of the pressed region becomes considerably faint and blends in with a peripheral color. In the case in Fig. 11C (K = 500 $\mu$m), even the pressed region is rarely colored.

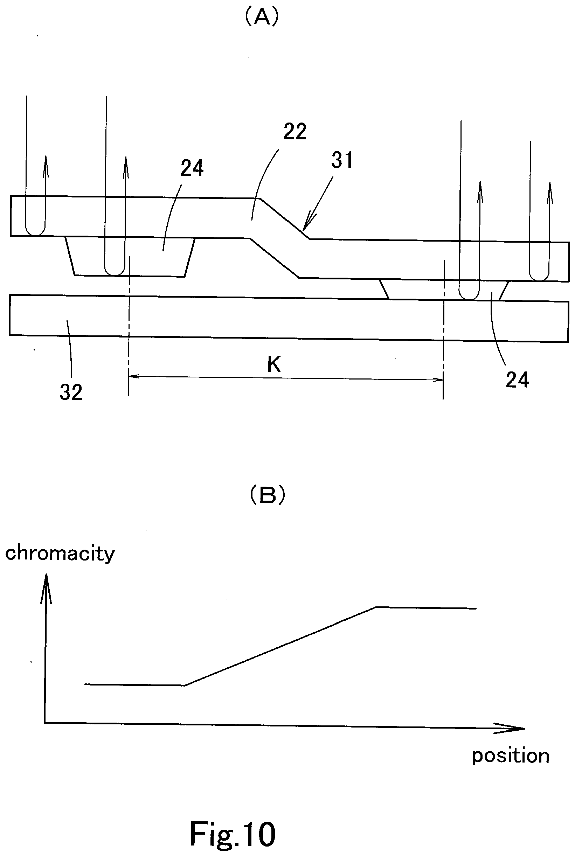

The reason for the phenomenon described above will be described below while Figs. 4 and 10 are compared with each other. Fig. 4A shows a state in which the antireflection film 14 according to the conventional technique is partially pressed, and Fig. 4B shows a chromacity (color intensity) at a position along the antireflection film 14 in the state. Fig. 10A shows a state in which the antireflection film 31 according to the second embodiment of the present invention is partially pressed, and Fig. 10B shows a chromacity at a position along the antireflection film 31 in the state. Since an identification capability (resolving power) of human' s naked eye is about 100 $\mu$m, when the interval between the protective pillars 15 as shown in Fig. 4A is smaller than 100 $\mu$m, colors on the protective pillars 15 cannot be independently recognized, and the entire region pressed against the facing member 18 looks planarly colored. At an edge portion of the pressed region, as shown in Fig. 4B, since chromacities change rapidly within a short distance, the edge of the colored region emerges and becomes conspicuous. In contrast to this, when the interval between the protective pillars 24 is 100 $\mu$m or more as shown in Fig. 10A, since the protective pillars 24 can be separately recognized, the area of the colored portion looks small even though the protective pillars 24 are pressed against the facing member 32. At an edge portion of the pressed region, as shown in Fig. 10B, since chromacities (color intensities) moderately change, the edge of the colored region blurs and becomes hardly conspicuous.

Thus, theoretically, the intervals K between the protective pillars need only be 100 $\mu$m or more. However, when high quality is desired, with reference to Figs. 11A to 11C, the intervals K at which the protective pillars are arranged are desired to be 200 $\mu$m or more.

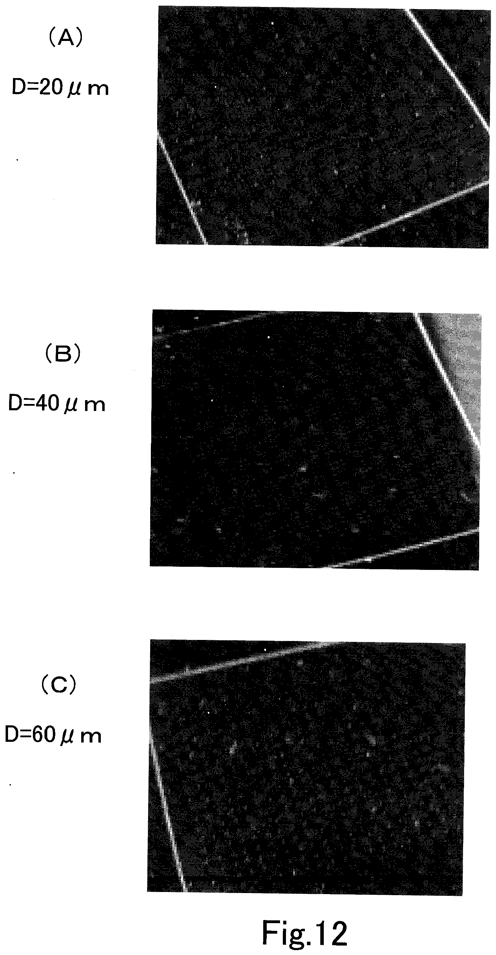

Fig. 12A is a photograph showing an antireflection film on which protective pillars each having the diameter D of 20 $\mu$m are arranged at intervals of 200 $\mu$m. Fig. 12B is a photograph showing an antireflection film on which protective pillars each having the diameter D of 40 $\mu$m are arranged at intervals of 200 $\mu$m. Fig. 12C is a photograph showing an antireflection film on which protective pillars each having the diameter D of 60 $\mu$m are arranged at intervals of 200 $\mu$m. When the diameters of the protective pillars are gradually increased, the protective pillars having the diameters D of 20 $\mu$m or 40 $\mu$m are not conspicuous as shown in Figs. 12A and 12B. However, when the protective pillars have the diameters D of 60 $\mu$ m, as shown in Fig. 12C, feeling of pimples caused by the protective pillars becomes considerably conspicuous. Thus, the diameters D of the protective pillars 24 are desired to be smaller than 60 $\mu$m. In particular, the protective pillars 24 having the diameters D of 40 $\mu$m or less become hardly conspicuous.

As described above, the protective pillars 24 are desirably arranged at the intervals K of 100 $\mu$m or more and desirably have the diameters D of smaller than 60 $\mu$m. The intervals K between the protective pillars 24 are desired to be, in particular, 200 $\mu$m or more. The diameters D of the protective pillars 24 are preferably minimized as long as the strengths of the protective pillars 24 can be kept. In particular, the diameters D are desired to be 40 $\mu$m or less. The protective pillars 24 preferably have an area density (percentage of a total area of protective pillars included in a certain area on a film base material) of almost 1%.

(Configuration of display device)

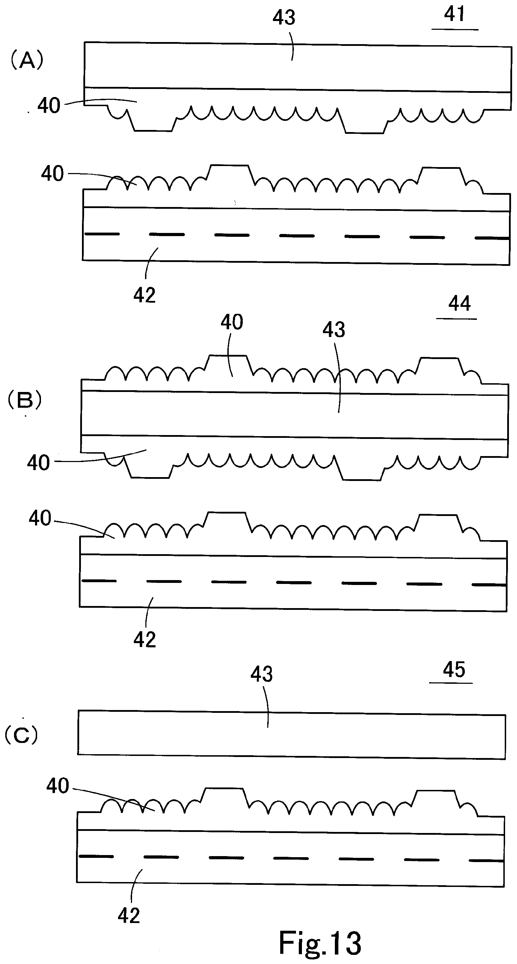

Figs. 13A to 13C show some modes of a display device to which an antireflection film 40 (for example, the antireflection film 21 or the antireflection film 31) according to the present invention is stuck. A display device 41 shown in Fig. 13A is obtained by superposing a cover panel 43 on the front surface of the image display panel 42 such as a liquid crystal display panel (LCD) or an organic EL (OLED) through an air gap (space). The antireflection film 40 is stuck to each of the rear surface of the cover panel 43 and the front surface of the image display panel 42. In a display device 44 shown in Fig. 13B, the antireflection films 40 are stuck to the front surface and the rear surface of the cover panel 43 and the front surface of the image display panel 42, respectively. The antireflection film 40 is also stuck to the front surface of the cover panel 43 as shown in Fig. 13B to increase an antireflection effect. However, since the antireflection film 40 on the front surface of the cover panel 43 is touched by a user, the antireflection film 40 may be damaged or contaminated. In a display device 45 shown in Fig. 13C, the antireflection film 40 is stuck to only one of the rear surface of the cover panel 43 and the front surface of the image display panel 42. In the mode as shown in Fig. 13C, an antireflection effect is deteriorated. However, since the cost also decreases, the mode is useful depending on applications. The image display panel 42 may be for a monochrome display or a color display. The cover panel 43 is a protective sheet made of a transparent resin and having a uniform thickness.

As described above, when the antireflection film 40 is used in combination with the image display panel 42, an alignment pitch of the protective pillars 24 on the antireflection film 40 may be almost equal to a pixel pitch of the image display panel 42. When the alignment pitch of the protective pillars 24 is almost equal to the pixel pitch, Moire fringes may occur on the screen of the display device.

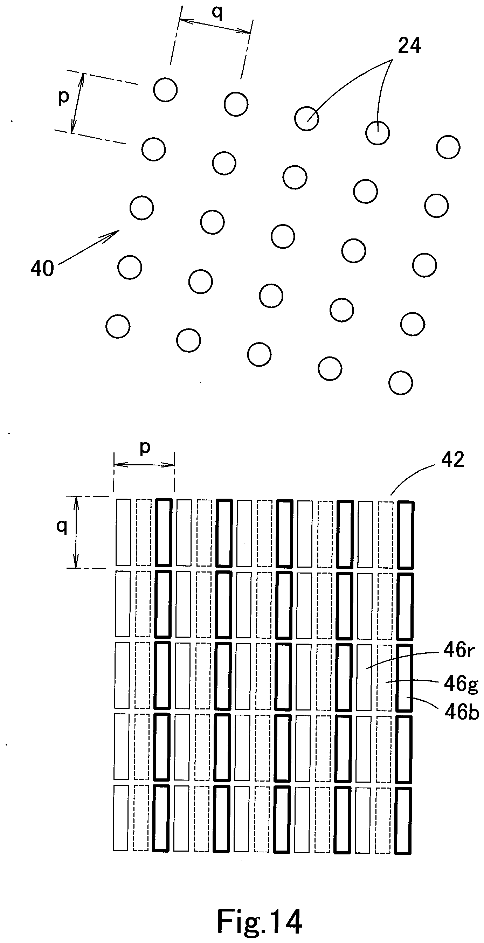

When the protective pillars 24 of the antireflection film 40 and the pixels of the image display panel 42 are aligned at the same pitches p and q to cause Moire fringes to occur, as shown in Fig. 14, the antireflection film 40 is rotated by about 90° with reference to the image display panel 42, so that a protective pillar alignment direction of the pitch p on the antireflection film 40 is almost parallel with a pixel alignment direction of the pitch q on the image display panel 42, and a protective pillar alignment direction of the pitch q on the antireflection film 40 is almost parallel with a pixel alignment direction of the pitch p on the image display panel 42. As shown in Fig. 14, the alignment directions of the protective pillars 24 need only be used to be slightly inclined with reference to the alignment directions of the pixels such that the alignment directions of the protective pillars 24 at the different pitches p and q are not parallel with the pixel alignment directions. In the image display panel 42 in Fig. 14, one set of a red pixel 46r, a green pixel 46g, and a blue pixel 46b configures one pixel.

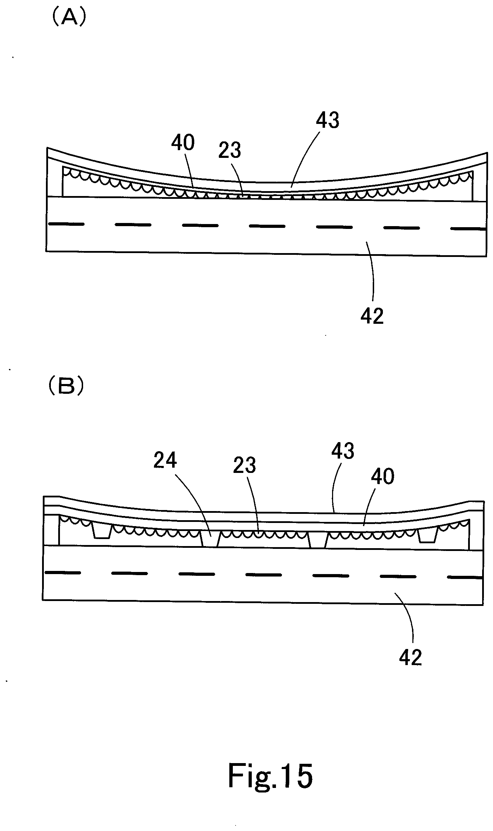

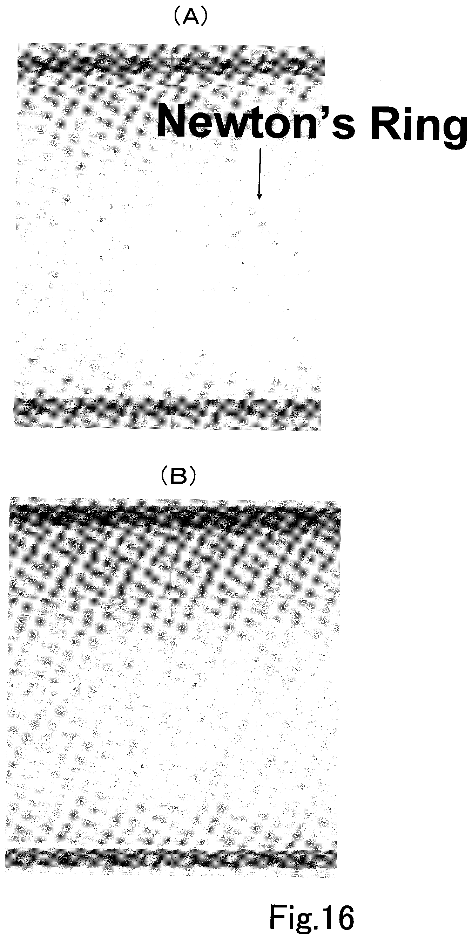

When the cover panel 43 faces the image display panel 42, unless an antireflection film is stuck to the cover panel 43, interference fringes (Newton's ring) occur when the cover panel 43 is pressed to make a gap between the cover panel 43 and the image display panel 42 about 60 $\mu$m. Fig. 16A shows a state in which the cover panel 43 is pressed with a finger to generate interference fringes. In contrast to this, when the antireflection film 40 is stuck to the inner surface of the cover panel 43 as shown in Fig. 15A, interference fringes do not occur unless the gap is about 2 $\mu$m.

Thus, when the protective pillars 24 each having a height of 2 $\mu$m or more as shown in Fig. 15B, more preferably, the protective pillars 24 having a height of about 3 $\mu$m are arranged on the antireflection film 40, interference fringes can be prevented from occurring. Fig. 16B shows a structure in which the antireflection film 40 having the protective pillars 24 each having a height of 3 $\mu$m is stuck to the rear surface of the cover panel 43. Fig. 16B is also a photograph obtained when the antireflection film 40 is pressed with a finger as in Fig. 16A. In this photograph, interference fringes do not occur. Thus, in order to prevent the interference fringes, the protective pillars 24 each having a height of 2 $\mu$m or more, more preferably, about 3 $\mu$m are advantageously arranged on the antireflection film 40. When the protective pillars 24 are arranged, the protective pillars 24 are advantageously arranged at a density of 1% or more per unit area. When the density of the protective pillars 24 is low, an intermediate area between the protective pillar 24 and the protective pillar 24 may be disadvantageously brought into tight contact with the image display panel 42.

**Claims**

1. An antireflection film (21, 31, 40) comprising:

a film base material (22);

an antireflection structure configured by a plurality of fine optical projections (23) formed on a surface of the film base material (22); and

a plurality of protrusions (24) formed, adjacent to fine optical projections (23) of said plurality of fine optical projections (23), on the surface of the film base material (22) , each protrusion (24) having a truncated cone shape with a distal-end surface (24b), and having a height (H) defined by said distal-end surface (24b) larger than that of the optical projection (23), wherein

in each of the plurality of protrusions (24), a sectional area of a section parallel with the surface of the film base material (22) gradually decreases from a proximal-end portion to said distal-end surface (24b), and

when a diameter of the protrusion (24) at a proximal end thereof, a height of the protrusion (24), and an angle between a side surface (24a) of the protrusion (24) and a central axis of the protrusion (24) on a section passing through the central axis of the protrusion (24) are given by D, H, and $\theta$, respectively, the antireflection film (21, 31, 40) has the following relationship:

D > 2H x tan (2$\theta$), wherein
when a refractive index of the protrusion (24) is given by n, at least one protrusion (24) of the plurality of protrusions (24) satisfies the following relationship:
$\theta$ > 0.5 x arcsin (1/n).

2. The antireflection film according to claim 1, wherein
a dimension of each of the protrusions (24) when viewed from the top is smaller than 60 $\mu$m, and the protrusions (24) are arranged at intervals (K) of 100 $\mu$m or more.

3. The antireflection film according to claim 2, wherein
the dimension (D) of each of the protrusions (24) when viewed from the top is 40 $\mu$m or less.

4. The antireflection film according to claim 2, wherein
an interval (K) between the protrusions (24) is 200 $\mu$m or more.

5. The antireflection film according to claim 1 or 2, wherein
a height (H) of each of the protrusions (24) is 2 $\mu$m or more.

6. The antireflection film according to claim 5, wherein
a density of the protrusion (24) per unit area is 1% or more.

7. A display device, comprising
the antireflection film according to claim 1 or 2, and
a liquid crystal panel (42),
wherein the antireflection film is superposed on said liquid crystal panel (42) such that an alignment direction of the protrusions (24) is inclined with reference to an alignment direction of the liquid crystal panel (42).

8. A display, comprising
the antireflection film according to claim 1 or 2,
an information display module (41, 44, 45), and
a cover panel (43) or a touch panel module,
wherein the antireflection film is arranged between said information display module (41, 44, 45) and said cover panel (43) or said touch panel module.

**Patentansprüche**

1. Antireflexionsionsfolie (21, 31, 40), die Folgendes umfasst:

ein Foliengrundmaterial (22),
eine Antireflexionsstruktur, die von einer Vielzahl feiner optischer Vorsprünge (23) gebildet wird, welche auf einer Oberfläche des Foliengrundmaterials (22) ausgebildet sind, und
eine Vielzahl Vorsprünge (24), die neben feinen optischen Vorsprüngen (23) der Vielzahl feiner optischer Vorsprünge (23) auf der Oberfläche des Foliengrundmaterials (22) ausgebildet sind, wobei jeder Vorsprung (24) eine Kegelstumpfform mit einer distalen Stirnfläche (24b) und eine von der distalen Stirnfläche (24b) definierte Höhe (H) aufweist, die größer ist als die des optischen Vorsprungs (23), wobei sich bei jedem der Vielzahl Vorsprünge (24) eine Querschnittsfläche eines parallel zur Oberfläche des Foliengrundmaterials (22) verlaufenden Querschnitts von einem proximalen Endabschnitt aus hin zur distalen Stirnfläche (24b) allmählich verkleinert und,

wenn ein Durchmesser des Vorsprungs (24) an dessen proximalen Ende, eine Höhe des Vorsprungs (24) und ein Winkel zwischen einer Seitenfläche (24a) des Vorsprungs (24) und einer Mittelachse des Vorsprungs (24) an einem durch die Mittelachse des Vorsprungs (24) verlaufenden Abschnitt durch D, H und θ gegeben ist, die Antireflexionsfolie (21, 31, 40) folgende Beziehung aufweist:

$$D > 2H \times \tan(2\theta),$$

wobei,

wenn ein Brechungsindex des Vorsprungs (24) durch n gegeben ist, mindestens ein Vorsprung (24) der Vielzahl von Vorsprüngen (24) der folgenden Beziehung genügt:

$$\theta > 0{,}5 \times \arcsin(1/n).$$

2. Antireflexionsfolie nach Anspruch 1, wobei eine Abmessung jedes der Vorsprünge (24) bei Betrachtung von oben her weniger als 60 μm beträgt und die Vorsprünge (24) in Abständen (K) von 100 μm oder mehr angeordnet sind.

3. Antireflexionsfolie nach Anspruch 2, wobei die Abmessung (D) jedes der Vorsprünge (24) bei Betrachtung von oben her 40 μm oder weniger beträgt.

4. Antireflexionsfolie nach Anspruch 2, wobei ein Abstand (K) zwischen den Vorsprüngen (24) 200 μm oder mehr beträgt.

5. Antireflexionsfolie nach Anspruch 1 oder 2, wobei eine Höhe (H) jedes der Vorsprünge (24) 2 μm oder mehr beträgt.

6. Antireflexionsfolie nach Anspruch 5, wobei eine Dichte des Vorsprungs (24) pro Flächeneinheit 1 % oder mehr beträgt.

7. Anzeigevorrichtung, die Folgendes umfasst:

die Antireflexionsfolie nach Anspruch 1 oder 2 und
einen Flüssigkristallbildschirm (42),
wobei die Antireflexionsfolie so auf den Flüssigkristallbildschirm (42) gelegt ist, dass eine Ausrichtrichtung der Vorsprünge (24) in Bezug zu einer Ausrichtrichtung des Flüssigkristallbildschirms (42) schräg ist.

8. Anzeige, die Folgendes umfasst:

die Antireflexionsfolie nach Anspruch 1 oder 2,
ein Informationsanzeigemodul (41, 44, 45) und
eine Abdeckplatte (43) oder ein
Berührungsbildschirmmodul,
wobei die Antireflexionsfolie zwischen dem Informationsanzeigemodul (41, 44, 45) und der Abdeckplatte (43) oder dem Berührungsbildschirmmodul angeordnet ist.

**Revendications**

1. Film anti-réflexion (21, 31, 40) comprenant :

un matériau de base sous forme de film (22) ;
une structure anti-réflexion configurée par une pluralité de fines projections optiques (23) formées sur une surface du matériau de base sous forme de film (22) ; et

une pluralité de saillies (24) formées, de manière adjacente aux fines projections optiques (23) de ladite pluralité de fines projections optiques (23), sur la surface du matériau de base sous forme de film (22), chaque saillie (24) ayant une forme de cône tronqué avec une surface d'extrémité distale (24b), et ayant une hauteur (H) définie par ladite surface d'extrémité distale (24b) supérieure à celle de la projection optique (23), dans lequel dans chacune de la pluralité de saillies (24), une surface transversale d'une section parallèle à la surface du matériau de base sous forme de film (22) diminue progressivement entre une partie d'extrémité proximale et ladite surface d'extrémité distale (24b), et

lorsqu'un diamètre de la saillie (24) à une extrémité proximale de celle-ci, une hauteur de la saillie (24), et un angle entre une surface latérale (24a) de la saillie (24) et un axe central de la saillie (24) sur une section passant par l'axe central de la saillie (24) sont appelés D, H et $\theta$, respectivement, le film anti-réflexion (21, 31, 40) présente la relation suivante :

$D > 2H \times \tan(2\theta)$, où
lorsqu'un indice de réfraction de la saillie (24) est appelé n, au moins une saillie (24) de la pluralité de saillies (24) satisfait la relation suivante :

$$\theta > 0{,}5 \times \arcsin(1/n).$$

2. Film anti-réflexion selon la revendication 1, dans lequel
une dimension de chacune des saillies (24) vues de dessus est inférieure à 60 $\mu$m, et les saillies (24) sont disposées à des intervalles (K) de 100 $\mu$m ou plus.

3. Film anti-réflexion selon la revendication 2, dans lequel
la dimension (D) de chacune des saillies (24) vues de dessus est de 40 $\mu$m ou moins.

4. Film anti-réflexion selon la revendication 2, dans lequel
un intervalle (K) entre les saillies (24) est de 200 $\mu$m ou plus.

5. Film anti-réflexion selon la revendication 1 ou 2, dans lequel
une hauteur (H) de chacune des saillies (24) est de 2 $\mu$m ou plus.

6. Film anti-réflexion selon la revendication 5, dans lequel
une densité de la saillie (24) par unité de surface est de 1 % ou plus.

7. Dispositif d'affichage, comprenant
le film anti-réflexion selon la revendication 1 ou 2, et
un panneau à cristaux liquides (42),
dans lequel le film anti-réflexion est superposé sur ledit panneau à cristaux liquides (42) de sorte qu'une direction d'alignement des saillies (24) soit inclinée en référence à une direction d'alignement du panneau à cristaux liquides (42).

8. Afficheur, comprenant
le film anti-réflexion selon la revendication 1 ou 2,
un module d'affichage d'informations (41, 44, 45), et
un panneau de recouvrement (43) ou un module de panneau tactile,
dans lequel le film anti-réflexion est disposé entre ledit module d'affichage d'informations (41, 44, 45) et ledit panneau de recouvrement (43) ou ledit module de panneau tactile.

Fig.1
PRIOR ART

(A)

16    15

14

(B)

14

15

(C)

14

16    15

14

(D)

15

Fig.2          PRIOR ART

L1

14

15

# Fig.3

# PRIOR ART

(A)

(B)

Fig.4
PRIOR ART

Fig.5

EP 2 827 177 B1

EP 2 827 177 B1

**Fig.6**

Fig.7

EP 2 827 177 B1

Fig.8

Fig.9

EP 2 827 177 B1

(A)

(B)

Fig.10

(A)

K=50 μm

R

(B)

K=200 μm

R

(C)

K=500 μm

R

Fig.11

(A)

D=20 μ m

(B)

D=40 μ m

(C)

D=60 μ m

Fig.12

(A)

43    41

40

40

42

(B)

40    43    44

40

40

42

(C)

43    45

40

42

Fig.13

Fig.14

(A)

(B)

Fig.15

(A)

**Newton's Ring**

(B)

Fig.16

**EP 2 827 177 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012037622 A
- JP 2004333976 A
- JP 2002122702 A
- JP 2004070164 A
- JP 4539759 B